(19) Europäisches Patentamt
European Patent Office
Office européen des brevets

(11) **EP 4 682 652 A1**

## (12) EUROPEAN PATENT APPLICATION

(43) Date of publication:
**21.01.2026 Bulletin 2026/04**

(21) Application number: **24189224.9**

(22) Date of filing: **17.07.2024**

(51) International Patent Classification (IPC):
**G05B 19/05** (2006.01)

(52) Cooperative Patent Classification (CPC):
**G05B 19/052;** G05B 2219/15012;
G05B 2219/15115; G05B 2219/15116

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventors:
• **Blenk, Andreas
86916 Kaufering (DE)**
• **Varastehhajipour, Amir
81379 München (DE)**

(74) Representative: **Siemens Patent Attorneys
Postfach 22 16 34
80506 München (DE)**

## (54) A METHOD FOR MIGRATING AN INDUSTRIAL CONTROL PROCESS

(57) The present embodiments provide an interruption-free migration of an industrial control process from a source instance of the industrial control process, or source control process, to a destination instance of the industrial control process, or destination control process. A proposed method involves the use of a network proxy representative of the industrial control process during the transfer process to intervene and control at least one device within one or more production cells. The network proxy may intervene in an active connection between a source control process and the at least one industrial device, transparently forwarding messages exchanged between them. Subsequently, a second passive connection may be established between a destination control process and the network proxy. This connection may be used to transparently forward duplicate messages exchanged between the network proxy and the at least one industrial device to the destination control process. Subsequently, the previous active connection may be converted into a passive one, executing both source and destination industrial control processes synchronously while synchronizing their internal operational states. Subsequently, the connection of the industrial device to the destination industrial control process may be handed over by converting the second passive connection between the destination industrial control process and the network proxy into an active connection extending from the destination industrial control process to the industrial device, the destination industrial control process assuming control over the industrial device. Eventually, the passive connection between the source control process and the industrial device may be terminated. The present embodiments ensure a smooth and uninterrupted transition of control from one industrial control process to another, wherein large parts of the migration process may extend over one or more cycle of a deterministic network.

FIG 1

## Description

**Technical Field**

The disclosed embodiments generally relate to the field of process automation, in particular to the field of process automation in industrial plants. More specifically, the disclosed embodiments relate to a migration of an Industrial Control Process such as a Virtual Programmable Logic Controller in a converged network environment.

**Background Art**

In the field of industrial networks, there is a discernible trend toward increased flexibility, resulting in the evolution of convergent networks that seamlessly integrate information technology (IT) and operational technologies (OT). In recent years, a major shift towards common technology and networking occurred which is commonly referred to as a convergence of IT and OT. Many cybersecurity and monitoring technologies that were once limited to use in enterprise IT environments are now being leveraged by OT technology vendors and owners. Whereas previously it was unusual to find enterprise IT software and hardware in an OT environment, it is now firmly established and commonplace. The convergence observed within these networks also extends in an opposite direction, signifying a growing incorporation of operational technology (OT) equipment into information technology (IT) environments. This paradigm shift allows organizations to leverage the benefits of OT even within traditional IT infrastructures.

One prominent example is Programmable Logic Controller of PLC. While traditionally a Programmable Logic Controller or PLC was made of physical device connected to industrial process equipment, PLC of today are becoming more of what they always were: control processes on a computer. While a PLC traditionally consisted of a physical device that had to co-located and connected to industrial process equipment, PLCs of today are increasingly becoming what was always at their core: industrial control processes running on a computer. As these industrial control processes no longer run in a dedicated physical device, they are now referred to as virtual PLCs or vPLC. Such vPLCs may be hosted on common of the shelve equipment (»COTS«) servers.

Contemporary configurations permit the integration of industrial machinery with virtual Programmable Logic Controllers (vPLCs) situated on virtualized servers.

The envisaged network infrastructure interlinking cells and data centers is predicated on IT apparatus, which is under the stewardship of IT administrative entities. A comprehensive connection between Operational Technology (OT) components - including production machines and vPLCs - is to be instituted via an amalgamation of IT devices, including servers and IT networking hardware like switches and routers, in conjunction with OT network apparatus such as PROFINET switches located within production cells. Nonetheless, this convergence engenders novel challenges related to a dynamic functionality of such systems. In the following, Operational Technology (OT) software assets such as a virtual Programmable Logic Controller (vPLC) software will generally be referred to as process software.

As an infrastructure of converged networks is not governed by a single instance - traditionally under the purview of an OT operator - novel mechanisms are imperative to enable migrations of process software, such migration may entail the transfer of a process software from one server to another, while maintaining continuous operation throughout the migration process, thus averting any interruptions in system functionality. Such migration of process software and operations is to be viable both within the boundaries of a manufacturing site, as well as externally, extending to subsidiary sites or data centers associated with the manufacturing site. In other words, the present embodiments may be used within factories, across factories, and across factories and cloud infrastructure.

**Summary of Invention**

It is therefore an objective of the invention to provide an interruption-free migration process for process software. This objective is achieved by the subject-matter of the independent claims.

According to an embodiment, a method for migrating an industrial control process is disclosed, the an industrial control process controlling at least one industrial device in a production cell over a deterministic network is disclosed, the method utilizing a network proxy for adhering to a time-synchronized scheduling imposed by the deterministic network, the method comprising the steps of:

    a) intervening, by the network proxy (NP), an active connection between a source control process (vPLCS) and the industrial device by transparently forwarding messages exchanged between the source control process (vPLCS) and the industrial device;
    b) establishing a second passive connection between a destination control process (vPLCD) and the network proxy (NP) for transparently forwarding duplicate messages exchanged between the network proxy (NP) and the industrial device to the destination control process (vPLCD);
    c) converting the active connection between the source control process (vPLCS) and the industrial device into a passive connection, executing both source control process (vPLCS) and destination control process (vPLCD) synchronously;
    d) determining a schedule for synchronizing internal operational states by transferring state data from the source control process (vPLCS) to destination control process (vPLCD) within one or more cycles of the deterministic network;

e) transferring the state data from the source control process (vPLCS) to destination control process (vPLCD) according to the determined schedule;

f) handing over, by the network proxy (NP) the connection of the industrial device to the destination control process (vPLCD) by converting the second passive connection between the destination control process (vPLCD) and the network proxy (NP) into an active connection extending from the destination control process (vPLCD) to the industrial device, the destination control process (vPLCD) assuming control over the industrial device; and;

g) terminating the passive connection between the source control process (vPLCS) and the industrial device.

In the realm of industrial automation, the term »transparent operation« denotes the degree to which actions and decision-making mechanisms of an automated system are predictable and deterministic, adhering to a pre-established protocol. This is to preclude occurrences of system halts or malfunctions, which could exert a substantial influence on the production workflows and culminate in considerable economic detriment to an enterprise. The term »transparently migrating« accordingly means that the relocation of process software is conducted in a manner that ensures all actions taken during the migration are consistent with uninterrupted production, allowing for a seamless transition without disrupting ongoing operations. The objective is to maintain the integrity and continuity of production workflows.

Embodiments disclosed herein pertain to a method for migrating industrial control processes - or process software in general - that obviates the necessity for completing the migration within a singular operational cycle. The embodiments rather ensure that, upon completion of the migration, the migrated process software will achieve an operational state corresponding to the operational state of the originating process software thereby ensuring a continuity of operation while preventing interruption of connectivity. The migration may, in other words, extend over one or more operational cycles, leveraging operational cycles being inherent to deterministic networks in an industrial environment. The synchronized states may eventually align or »converge« in order to reach an identical or at least similar state.

Hereinafter, the terms »synchronization of states« or »convergence of states« refer to the alignment or coordination of internal states between a first and a second industrial control process wherein the alignment of their internal states may extend across one or more successive cycles in a deterministic network. Both the first (source) control process and the second (destination) control process may be stateful, meaning that each process may administer its own state context and allowing its context to dynamically adapt based on its state.

The state of a process may be formed or defined by a pattern consisting of a collection of signals, timers, counters, and/or messages. The term »convergence of states« specifically refers to the procedure where states being imposed to a synchronization of states gradually move toward a common outcome or pattern. Over one or more cycles, the synchronized states may align to reach an identic or at least similar state, forming a pattern of a collection of signals and/or messages.

A main actor of this migration - which may be hereinafter referred to as proxy - may be placed flexibly across the network infrastructure. This proxy may be advantageously positioned at desired locations, including the periphery of production cells, embedded within the IT network, or situated in or proximate to the industrial data center, thereby facilitating the migration process.

The present embodiments allow for a migration of process software and operations which is viable both within the boundaries of a manufacturing site, as well as externally, extending to subsidiary sites or data centers associated with the manufacturing site. In other words, the present embodiments may be used within factories, across factories, and across factories and cloud infrastructure.

The proposed embodiments differ from previously known migration procedures in that they may optionally work without any buffering, relying solely on the inherent capabilities of the embodiments to transfer the state from a source control process to a destination control process within one or more cycles in order to eventually converge in an identical state.

**Brief** Description of the Drawing

The objects as well as further advantages of the present invention will become more apparent and readily appreciated from the following description of the preferred embodiments, taken in conjunction with the accompanying drawing accompanying drawing of which:

FIG. 1     illustrates a fundamental approach for a migration of industrial control process according to embodiments;

Fig. 2     illustrates a schematic process chart depicting an exchange of data transmissions for a migration process according to the state of the art;

Fig. 3     illustrates a schematic diagram of functional units participating in a migration process according to embodiments;

Fig. 4     illustrates a schematic diagram of different placement options of a network proxy;

Fig. 5     illustrates a schematic diagram of state transfers in a migration process;

Fig. 6     illustrates a schematic process chart depicting an exchange of data transmissions for operating a migration request;

Fig. 7     illustrates a schematic process chart depicting an exchange of data transmissions for operating an initialization;

Fig. 8   illustrates a schematic process chart depicting an exchange of data transmissions for operating a handover for one or more stateless control process;

Fig. 9   illustrates a schematic timing chart depicting a process for migrating a stateful control process extending over one cycle;

Fig. 10   illustrates a schematic timing chart depicting a process for migrating a stateful control process extending over more than one cycle;

Fig. 11   illustrates a schematic process chart depicting an exchange of data transmissions for operating a handover for one or more stateful control processes; and;

Fig. 12   illustrates a schematic process chart depicting an exchange of data transmissions for operating a clean-up phase.

## Description of Examples

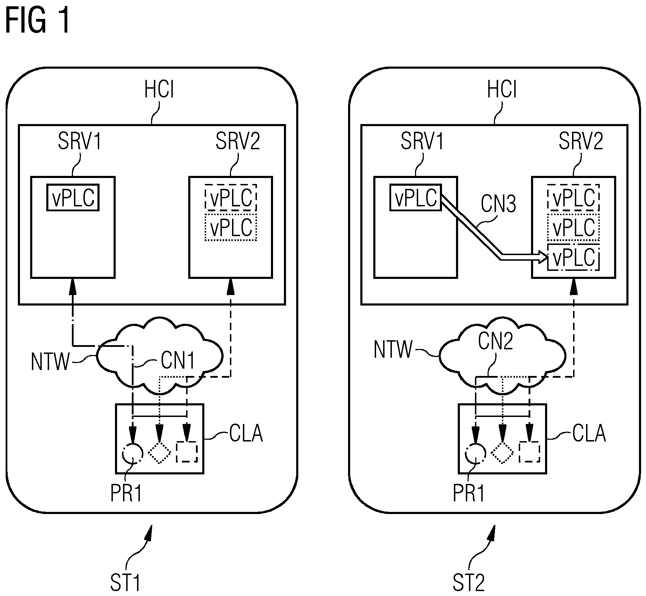

FIG. 1 depicts an illustrative use case which may addressed by the embodiments. In a continuous operation of a converged industrial network environment, a process software, particularly a virtual Programmable Logic Controller (vPLC), is to be migrated from a first server to a second server while integrity and continuity of production workflows are not substantially affected. A left part of the FIG. 1 shows a first state ST1 of a system before migration, a right part of the FIG. 1 shows a second state ST2 of a system after migration.

In the illustrative environment according to FIG. 1 - intentionally simplified for the purpose of fundamental comprehension - an exemplary production cell CLA is connected via a converged network NTW with a hyperconverged infrastructure HCI. Hyperconverged infrastructures are generally known in the art and may comprise set ups including a plurality of servers, computers, virtual machines, storage and network solutions, which may be integrated and centrally controlled. As exemplary components of the hyperconverged infrastructure HCI a first and a second server SRV1, SRV2 are shown, whereby - with regard to the description further down below - the first server SRV1 may also be referred to as the destination server and the second server SRV2 may also be referred to as a target server.

Hereinafter, a production cell may refer to a collection of one or more production devices or machines being controlled by an industrial control software. The term production cell may include one or more production machines, devices such as IO devices, sensors, or actors being systematically or locally assigned to the production cell. The term production cell may also refer to a specific unit or component within a production cell thereby - pars pro toto - representing the object of control subject to the controlling industrial control software.

A number of processes including production processes are executed in the production cell CLA whereby some production processes are shown in Figure 1 with a circular, diamond-shaped or square shape. Only one of these processes symbolized by a circular shape is hereinafter referred to as first process PR1 and described in more detail below.

While industrial production processes PR1 within the production cell CLA have traditionally been controlled by a Programmable Logic Controller or PLC co-located with the production cell CLA and executing an industrial control process, these industrial production processes are no longer confined to a dedicated device or necessarily remain physically co-located with the production cell CLA. A number of industrial control process vPLC as shown in FIG. 1 are executed in the hyperconverged infrastructure HCI on the first or the second server SRV1, SRV2 as shown in the drawing.

Virtualization of these control processes vPLC in the production cell CLA may mean that the control process vPLC for controlling the production process PR1 is not executed in the production cell CLA itself but on a server SRV1, SRV2, in this case the first server SRV1. Virtualization may further mean that the virtualized process vPLC executed in the first server SRV1 may be logically connected to the production process PR1 in that the virtualized process vPLC produces the same effects as if it were executed locally in the production cell CLA.

Turning now to the right part of the FIG. 1 in which a second state STB of the system during or after a migration of one of the control processes vPLC from a source server SRV1 to a destination server SRV2 is shown. The migration of the control process vPLC controlling the production process PR1 is illustrated by a logical connection CN3 extending from the control process vPLC being hosted by the first server SRV1 to the newly established control process vPLC being hosted by the second server SRV2.

After the migration of the control process vPLC has been completed - and/or even while the migration of the control process vPLC is in progress - the previous logical connection CN1 of the production process PR1 has been terminated - or is in a progress of being terminated - in favor of a newly established logical connection CN2 diverting to the newly established control process vPLC being hosted on the second server SRV2. It is a task of the embodiments to enable this migration free of interruption. It is a task of further embodiments to enable this migration not to take place all at once without any time delays, but preferably in a continuous, cyclically structured or - in other words - transparent operation enabling the migration without downtime of individual components.

In the realm of industrial automation, the term »transparent operation« may denote a degree to which actions and decision-making mechanisms of an automated system are predictable and deterministic, adhering to a pre-established protocol. This is to preclude occurrences of system halts or malfunctions, which could exert a substantial influence on the production workflows and culminate in considerable economic detriment to an enterprise. The term »transparently migrating« may accordingly mean that the relocation of control processes or, more generally, process software is conducted in a manner that ensures all actions taken during the migration are consistent with uninterrupted production, allowing for a seamless transition without disrupting ongoing operations. A main objective is to maintain the integrity and continuity of production workflows.

According to embodiments, modules and/or mechanisms may be used to enable a transparent operation of control process vPLC in a converged OT/IT network environment. The OT/IT network may advantageously provide deterministic network guarantees synchronizing substantially all network elements incurred in the migration process. Using the provide deterministic network guarantees, the embodiments may apply a scheduling-based mechanism to provide an interruption-free migration process.

According to embodiments, the migration may be supported or directed by a newly proposed network proxy. The proposed network proxy - not shown in FIG. 1 - may be operated for managing one or more logical connections between control process vPLC hosted on high performance infrastructures, while the production cell CLA - or production machines located in the production cell CLA - may be connected by a network NTW being characterized by deterministic IT network infrastructure which may provide deterministic network traffic guarantees. The network proxy may advantageously ensure that at least one logical connection CN1, CN2 between the production process PR1 and the control process vPLC assigned to this production process PR1 may remain intact and uninterrupted during migration of the control process vPLC. Moreover, the proposed network proxy - not shown in FIG. 1 - may be flexibly placed across the network infrastructure, i.e., at the production cell boarders, within the network NTW, and at or within the hyperconverged infrastructure HCI, for example within an industrial data center.

According to further embodiments, the migration may be supplemented by implementing mechanisms within the control process vPLC for buffering signals in order to synchronize states or status conditions of the previous instance of the control process vPLC and the new instance of the control process vPLC instantiated after the migration.

According to the proposed embodiments, control software vPLC may be transparently migrated between servers SRV1, SRV2 without needing to substantially complete the migration instantaneously or within one cycle. Rather or even more, the embodiments ensure that the newly created instance of the control software vPLC to be migrated ultimately ends up in the same operating states as the finally terminated previous instance of the control software vPLC, thereby preventing an interruption of a logical connection CN1, CN2 between the production process PR1 assigned to the control software vPLC while migration is in progress.

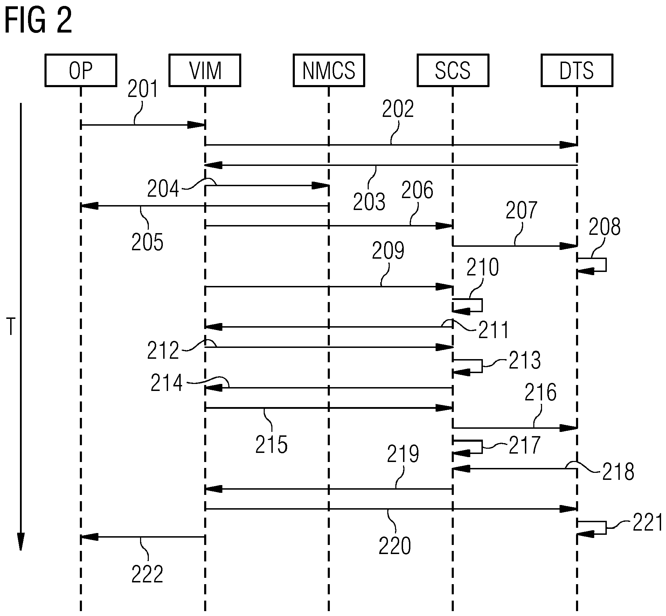

In the following, a sequence diagram as shown in FIG. 2 is employed to illustrate the execution of a migration process following conventional practices while emphasizing potential drawbacks inherent to this conventional migration approach. Notably, the conventional migration approach may be fraught with considerable disadvantages and, in various instances, may even result in migration failures.

FIG. 2 shows a schematic process chart depicting a chronologically ordered exchange of control and data transfer transmissions amongst various functional units OP, VIM, NMCS, SCS, DTS cooperating to environmentally control a migration of a virtual programmable logic controller. A timeline T is shown on the left side of figure 2 in which consecutive points in time are chronologically ordered, such that data points in time are further down than earlier points in time. For each of the functional units OP, VIM, NMCS, SCS, DTS a respective vertical dash line is plotted in order to illustrate a message exchange of the respective functional unit in relation to the point in time. The sequence diagram, as depicted in FIG. 2, may represent the outcome of a network operator OP seeking - e.g. for maintenance purposes - to migrate a control software vPLC being executed inside a virtual machine or a container from a source server SCS to a destination server DTS.

In a first step of the method as shown, the operator OP may enter a migration command to a - not shown - management system, e.g., via a console. In the course of this command, a first command message 201 is transferred from the operator OP to a virtual infrastructure manager VIM, the command message 201 instructing the virtual infrastructure manager VIM to migrate a - not shown - virtual Programmable Logical Controller or vPLC from a source server SCS to a destination server DTS.

In a consecutive step, a second command message 202 is sent from the virtual infrastructure manager VIM to the destination server DTS instructing the destination server DTS to create a new instance of a virtual machine or, more specifically, a new instance of a virtual Programmable Logical Controller vPLC. The destination server DTS, after having created the new instance as instructed, responds to the virtual infrastructure manager VIM by transmitting a third report message 203 reporting the successful creation.

In a consecutive step, a network management and control system NMCS is to be utilized to check whether a network path exists which may guarantee a requested latency. To this end, the virtual infrastructure manager VIM sends a command message 204 to the network management and control system NMCS instructing the network management and control system NMCS to find and setup a new network path between devices within the production cell along with further devices such as input/output or IO devices and the destination server DTS. However, a service-oriented architecture or SoA of the present environment may already fail at this point due to improper resource planning or missing mechanisms. The network management and control system NMCS would, therefore, respond by a message 205 informing the operator OP that the migration cannot be performed. This error message 205 may be sent for cases in which a deterministic path with a required latency cannot be found and/or occurrence of improper resource planning or missing mechanisms. For one of these reasons, the process would then be aborted in an undesirable manner and the error message 205 may inform the operator OP about this abortion of the migration process.

The following messages 206 through 222 are exchanged for the alternative case that a deterministic path may be found. If a path may be found, the process may continue and the actual migration process may start. Given this case, the following messages 206 through 211 are exchanged to handle the migration. In a service-oriented architecture or SoA the migration is processed in that memory contents of the previous virtual machine or VM are transmitted to the newly instantiated virtual machine or VM.

The virtual infrastructure manager VIM may transmit a sixth command message 206, instructing the source server SCS to start an iterative state transfer. Consequently, the source server SCS transmits a seventh command message 207 to the destination server DTS with an instruction to transfer its memory contents. In a loop 208, the destination server loads memory contents into the newly created virtual PLC. The aforementioned command message 207 and loop 208 are related to an iterative pre-copy migration.

In the following steps 209, 210, 211, a case is handled in which a stopping condition has been reached. The virtual infrastructure manager VIM sends a ninth command message 209 to the source server SCS instructing the source server SCS to stop transferring the memory. In a loop 210, the source server SCS is stopping the transfer. Consequently, after having concluded stopping the transfer, the source server SCS sends an eleventh notification message 211 to the virtual infrastructure manager VIM reporting that its memory transfer has been stopped.

After the memory contents have been entirely transferred, the handover process may start whereby subsequently exchanged messages 212 through 222 are exchanged to handle the handover process. In a service-oriented architecture or SoA, the handover is processed in that the previous virtual machine or VM has to be stopped so that the memory of the previous virtual machine or VM is prevented from being furtherly updated. Accordingly, this handover necessarily entails an unavoidable service interruption and/or downtime for portions of the system controlled by the virtual Programmable Logical Controller or vPLC. However, this contradicts the primary object of the disclosed embodiments, which aims to avoid service interruptions and downtimes whenever feasible. As a result, the existing known method suffers from notable drawbacks in this respect.

A twelfth command message 212, sent from the virtual infrastructure manager VIM to the source server SCS, instructs the source server SCS to stop the virtual machine or VM. In a loop 213, the source server SCS is stopping the process for the virtual Programmable Logical Controller or vPLC. After the process for virtualizing the Programmable Logical Controller or vPLC has been stopped, a fourteenth notification message 214 is dispatched to the virtual infrastructure manager VIM reporting the virtual Programmable Logical Controller or vPLC having been stopped. In the usual and presently used service-oriented architecture or SoA, the handover is processed in that the previous virtual machine or VM has to be stopped so that the memory of the previous virtual machine or VM is prevented from being furtherly updated. This, however, may insert a short connection interrupt whose duration is not deterministic. Accordingly, the connection may be potentially interrupted for a time span - in between exchanging messages 215 through 219 - which may overlap with the conclusion of the memory migration process and which potentially would have been required to conclude the memory migration process.

In a subsequent step, a fifteenth command 215 is sent from the virtual infrastructure manager VIM to the source server SCS instructing the source server SCS to transfer the remaining data and/or memory contents. The source server SCS forwards this command by a subsequent sixteenth command message 216 sent to the destination server DTS, instructing the destination server DTS to transfer the remaining memory data. By a loop 217, the destination server DTS is loading memory contents into the newly created virtual Programmable Logical Controller or vPLC. By a report message 218, the destination server DTS informs the source server SCS that the memory data have been fully received. The source server SCS sends a nineteenth report message 219 to the virtual infrastructure manager VIM, informing that virtual infrastructure manager VIM that the transfer has been completed. In a consecutive step, the virtual infrastructure manager VIM sends a twentieth instruction message 220 to the destination server DTS instructing the destination server DTS to start the virtual PLC. The destination server DTS starts the new virtual Programmable Logical Controller or vPLC instance by a loop 221. In a final step 222, the virtual infrastructure manager VIM reports to the operator OP that the migration has been completed.

After the memory contents have been migrated, the new virtual machine or VM may be started and the industrial process may be started up or continued. During the system start up, however, the processing machine may have entered a stop state. Furthermore, safety applications like Profinet Safety may have fully stopped the production process, which may cause significant process impacts with unpredictable consequences.

The description of presently known methods based on FIG. 2 has shown that using the virtual infrastructure manager VIM to »simply« start a new virtual machine or VM running the vPLC presents significant pitfalls in practice. The prevailing challenge of unavoidable system interruptions significantly impacts industrial processes, where uninterrupted operation is an essential prerequisite.

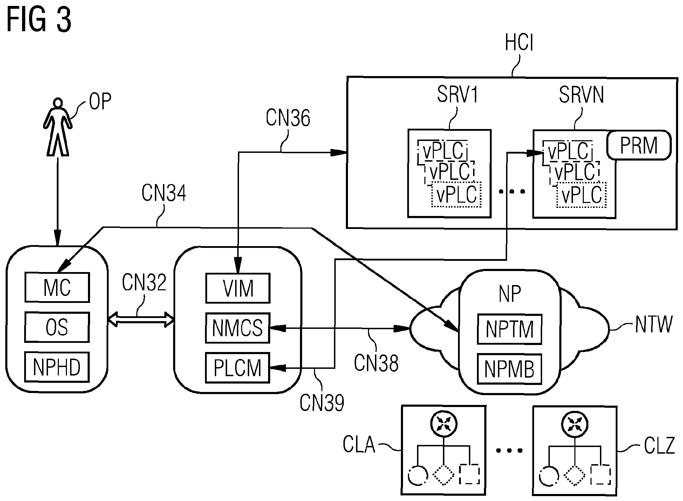

Fig. 3 illustrates a schematic diagram of functional units participating in a migration process according to embodiments. The present invention is predicated upon the objective of providing an interruption-free migration mechanisms for an industrial control process such as a virtual programmable logic controller. In a central block of FIG. 3, three functional units, virtual infrastructure manager VIM, a network management and control system NMCS and a process repository manager PLCM are depicted. These functional units may be known in principle in the state of the art and may receive numerous functional extensions through the present embodiments, as further explained below. In the drawings, like reference numerals may describe like or at least similar components in different embodiments.

In the right portion of FIG. 3, a layered arrangement substantially corresponding to the layers of FIG. 1 is depicted. The arrangement shown in FIG. 3 comprises two or more exemplary production cells CLA, CLZ, which may exchange data via a converged network NTW with a hyperconverged infrastructure HCI. As exemplary components of the hyperconverged infrastructure HCI a first and an N-th server SRV1, SRVN are shown, where N may represent a natural number.

The term »production cell« as used for the exemplary production cells CLA, CLZ may refer to one or more production devices or machines being controlled by an industrial control software. It may include devices such as IO devices, sensors, or actors being systematically or locally assigned to the production cell. The term production cell may also refer to a specific unit or component within a production cell thereby representing the object of control subject to the controlling industrial control software.

This layered arrangement may be complemented with functional units according to a middle and a left area of FIG. 3. These additional functional units may control the migration according to the disclosed embodiments. In the following, the properties of these functional units are addressed, before their interaction and their interrelationship is described in more detail. In a central block of FIG. 3, three functional units VIM, NMCS, PLCM are depicted, which may be isolated known:

- The virtual infrastructure manager VIM may provide features for instantiating new virtual machines or containers that may host the virtual Programmable Logic Controllers or vPLCs on physical servers.
- The network management and control system NMCS may provide capabilities for requesting deterministic network paths and for configuring or reconfiguring network elements in order to host network proxy capabilities in a predictable manner. The network management and control system NMCS may further provide interfaces for interacting with further functional units in order to transmit or receive signals or messages concerning triggered operations.

- The process repository manager PLCM may be understood as a software portal for providing access to a wide range of digitalized automation services including programmable logic controllers. The process repository manager PLCM may be embodied by a portal known as TIA Portal or Totally Integrated Automation Portal which has been developed by the applicant of the present proposal. The process repository manager PLCM may host capabilities to allow an operator OP to interact with virtual programmable logic controllers vPLC. According to the embodiments described hereinafter, the process repository manager PLCM may be extended to enable the operator OP to perform a migration between servers such as edge clouds. The operator OP may also receive status information about current migration processes. The operator OP may further configure an orchestration service OS as described below. The operator OP may configure the orchestration service OS with the object of achieving specific operation targets, e.g., resource optimization.

Further functional units as depicted across FIG. 3 may pertain to main components of the present embodiments:

- A migration controller MC may provide functionalities for interacting with the network management and control system NMCS and the virtual infrastructure manager VIM. The migration controller MC may further host the orchestration service OS.
- A network proxy NP may implement and host some or all functionalities for enabling the migration of vPLCs such as traffic steering, packet modification/-duplication, buffering signals etc. The network proxy NP may integrate a network proxy handover decision module NPHD and a network proxy traffic manager NPTM as described below. The network proxy NP may either be realized in software, in software & hardware, or in hardware only. Accordingly, the network proxy NP may be hosted on servers and/or on programmable networking hardware of any kind including programmable network switches, smart network interface card (NIC) or SmartNICS etc.
- The network proxy handover decision module NPHD may observe the migration process while reading signals or messages received from vPLCs. Signals or messages received from vPLCs may include original and migrated replica signals or messages. When scheduled, the network proxy handover decision module NPHD may stop forwarding the signals and messages from or to a previous vPLC instance while forwarding signals and messages only from or to a newly instantiated vPLC instance. The network proxy handover decision module NPHD may further compare signals and messages pertaining to previous and newly instantiated vPLCs for verification reasons.

- The network proxy traffic manager NPTM may be designed as a further proxy module for managing a traffic between vPLCs - which may be hosted on virtual machines - and assets executed in cells. To provide a transparent operation and update mechanism to the assets running in production cells CLA, CLZ. The network proxy traffic manager NPTM may amend or rewrite network packets exchanged by the network proxy traffic manager NPTM. Amending or rewriting network packets exchanged by the network proxy traffic manager NPTM may particularly include altering header information in network packets exchanged - i.e. received, processed and/or transmitted - with the participation of or by the network proxy traffic manager NPTM. The network proxy traffic manager NPTM may use programmable hardware or existing capabilities of network interface cards or SmartNICS in order to offload said amending or rewriting functions.

- A network proxy message buffer NPMB may buffer input messages and/or input signals from production machines located in the production cells CLA, CLZ during a migration process. Once the newly instantiated vPLC instance becomes active, the network proxy message buffer NPMB may transmit the buffered messages or signals received during the state transfer process to the newly instantiated vPLC instance. These input messages or input signals may be buffered as soon as the state migration process - whose timing will be described in more detail a by schematic process charts hereinafter - commences, transitioning from the previous to the newly instantiated vPLC instance. Upon completion of the state migration, the buffered messages are replayed to the vPLC. After having finished the replay sending process, the network proxy NP may start forwarding the next messages.

- An orchestration Service OS may extend the network management and control system NMCS. The orchestration Service OS may enable an automated decision making, e.g., it may collect information about high server utilizations from the virtual infrastructure manager VIM in order to automatically decide migrating one or more instances of process software such as vPLCs. The automatic decision may made to ensure achievement of required performance measures. In the present scenario the operator OP may decide for a migration, while in another case, this decision may be made automatically by the orchestration Service OS based on a network situation. For load balancing and similar tasks, the orchestration Service OS may additionally utilize services provided by the virtual infrastructure manager VIM and/or the services from the network management and control system NMCS in order to implement the decision in practice.

- A PLC Replay Module PRM may receive buffered input signals and/or messages from the network proxy NP. The PLC Replay Module PRM uses the signals and/or messages to transition the state of the new vPLC instance. Through this mechanism, convergence of the migrated PLC the same state as the previous vPLC instance is ensured. The operation of the vPLC is initiated once the replay and state processing have been completed. A comprehensive depiction of this process is provided in sequence diagrams further down below.

In addition to - not further detailed - interfaces CN36, CN38, CN39 in connection with the virtual infrastructure manager VIM or one of its submodules - the network management and control system NMCS and /or the process repository manager PLCM - an interface CN34 for exchanging information such as control signals and/or messages between the migration controller MC and the network proxy NP and an interface CN32 for exchanging information such as control signals and/or messages between the migration controller MC and the virtual infrastructure manager VIM may be provided.

The interface CN32 may be configured to facilitate the exchange of information between the migration controller MC and the virtual infrastructure manager VIM. The migration controller MC may send command messages for instantiating new containers or virtual machines via this interface CN32 to the virtual infrastructure manager VIM.

The interface CN32 may be configured to facilitate the exchange of information between the migration controller MC and the network management and control system (NMCS), This setup may occur concurrently or alternatively, depending on the specific requirements of the system.

The interface CN32 may be configured to facilitate requesting deterministic network paths for the migration of the vPLCs. It may be further configured to determine whether network paths may exist and whether these existing paths are deterministic and may lead to better resource utilization.

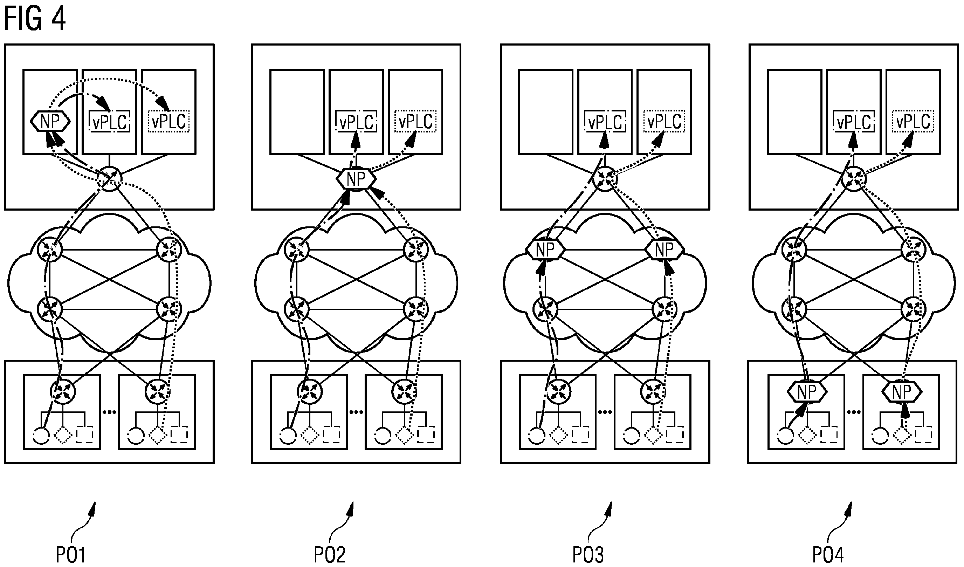

Fig. 4 illustrates different placement options of the network proxy NP or network proxy module NP. According to a first placement option PO1, one or more network proxy modules NP may be placed on a server, in the exemplary placement option PO1 according to FIG. 4 the network proxy module NP may be executed on a far-left server in the hyperconverged infrastructure HCI. This first placement option PO1 may be described as a software and server-based deployment of the network proxy NP.

According to a second placement option PO2, one or more network proxies NP may be operated as a dedicated network proxy device NP being, for example, assigned to and/or located in the hyperconverged infrastructure HCI. This second placement option PO2 may be described as a hardware-based deployment of the network proxy device NP within a hyperconverged infrastructure HCI or within a data center.

According to a third placement option PO3, one or more network proxies NP may be operated as a network proxy device which may additionally act as a switch or a router within the network NTW. The network proxy NP may be alternatively or additionally functionally realized by a cooperation of one or more of network devices as shown in FIG. 4. This third placement option PO3 may be described as a hardware-based deployment of the network proxy device NP within a the network NTW.

According to a fourth placement option PO4, one or more network proxy modules NP may be placed within a production cell or within a production machine. In the exemplary placement option PO4 according to FIG. 4 one or more network proxy modules NP may be executed within two or more production cells CLA, CLZ. Accordingly, this fourth placement option PO4 may be described as a hardware-based deployment of the network proxy NP within one or more production cells CLA, CLZ.

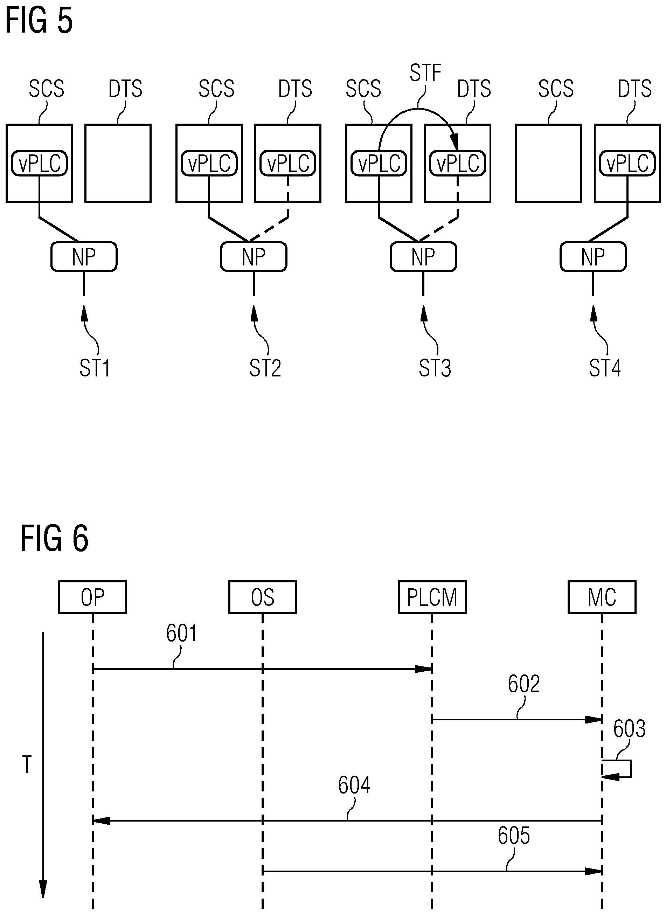

Turning now to Fig. 5 which illustrates a high-level schematic diagram of state transfers in a migration procedure according to the present embodiments.

The present disclosure is generally directed to coordinating operations of devices that are part of an operation technology (OT) system using information technology (IT) systems. Industrial control systems may be used to control and manage operations of devices that are part of the OT system. However, operators of these industrial automation systems may benefit from managing assets, such as programmable logic controllers (PLCs), that are part of the OT network using similar processes provided by information technology systems. By way of example, container orchestration systems may be used in IT systems to manage IT assets. That is, certain IT systems may leverage software containers (e.g., operating system level virtualization) in conjunction with container orchestration systems (e.g., Docker, Kubernetes) to coordinate the construction and deployment of various containers across a number of computing resources. Indeed, containers may include standard units of software that packages code and its dependencies, such that a container node may execute the application stored in the container regardless of the computing environment or infrastructure. As a result, multiple containers may run on the same machine and share an operating system kernel with other containers, such that each container is running as an isolated process in the respective machine. In this way, container orchestration systems that operate in the IT environment build application services operate across multiple computing resources, such that certain applications - which may be packaged as software containers - may be automatically deployed, scaled, and managed in the same machine or across multiple machines in disparate computing environments. Using container orchestration systems to manage the operations of OT assets may realize many advantages including large scale application deployment, providing updates from managed registries, providing high availability using standby and backup container replicas in different OT assets, and the like. The present disclosure focuses on operations or devices within a converged network - e.g. a network harmonizing both, operation technology (OT) and information technology (IT) data exchanges and/or a network which may be supported with dedicated hardware of both technologies - in an industrial setup. Industrial control systems, however, need to be regularly or irregularly migrated without affecting the uptime of the production process.

For various reasons, including maintenance or performance enhancement, industrial control processes need to be periodically or irregularly migrated from a current source server SCS to a destination server DTS without disrupting or affecting the uptime of the production process.

A high-level migration procedure is depicted in FIG. 5. This figure shows an abstract view of a migration of a virtual PLC or an instance of a PLC- being an illustrative example for migrating an industrial control process in general - from a current source server SCS on a respective left side, to a destination server DTS on a respective right side in each of the status illustrations ST1, ST2, ST3, ST4 as shown in FIG. 5. A network Proxy NP as shown in FIG. 5 may conform with a network proxy NP as shown in FIG. 3.

In a first status ST1 the industrial control process or, exemplarily, the virtual Programmable Logical Controller or vPLC, may be executed on the source server SCS. A network connection - drawn with a solid vertical or inclined line - between the virtual Programmable Logical Controller vPLC and a network Proxy NP of an industrial device in a production cell - not shown in FIG. 5 - may be operated normally. Said industrial device in a production cell may also be referred to as production cell in short. This first status ST1, may also be referred to as a status before migration.

In this status ST1 the network proxy NP - not shown in FIG. 5 - may be configured to permit the virtual Programmable Logic Controller vPLC residing on the source server SCS to exert control over the industrial devices in the production cell. The network proxy NP may initiate intervening the active connection between the virtual Programmable Logic Controller vPLC and the industrial device by transparently forwarding messages exchanged between the virtual Programmable Logical Controller vPLC and the industrial devices

A second status ST2 may represent a state of the network after an initialization of the migration of the virtual Programmable Logical Controller vPLC from the source server SCS to the destination server DTS has been initialized. In this second status ST2 - which may also be referred as an initialization - two main tasks may need to be done:

- A new virtual Programmable Logical Controller vPLC instance on the destination server DTS has to be created. This newly instantiated virtual Programmable Logical Controller vPLC is already depicted in the destination server DTS in addition to the still existing virtual Programmable Logical Controller vPLC on the source server SCS on the left side of the illustration of the second state ST2.
- setting up a new additional connection - drawn with a dashed vertical or diagonal line - from the Proxy network proxy NP to the destination server DTS.

The new additional connection must be determined or »found« in the network such that Quality of service or QoS requirements - e.g., an end-to-end delay - from the production cell to the virtual Programmable Logical Controller vPLC may still be guaranteed. In this status ST2 the connection along the virtual Programmable Logical Controller vPLC, the destination server DTS, and the network Proxy NP may be in a »passive« state which is illustrated by a dashed line. This passive state may mean that duplicates of messages exchanged between the network proxy (NP) and the industrial device in the production cell may be forwarded to the destination industrial control process (vPLCD). Although traffic from the production cell may be forwarded to the virtual Programmable Logical Controller vPLC already executed in the destination server DTS, the network proxy NP may not forward an output of the virtual Programmable Logical Controller vPLC in the destination server DTS towards the production cell, i.e. in the direction of the downward line. This still one-sided setup in this second phase help may serve to monitor, compare, and analyze the output of the virtual Programmable Logical Controllers vPLC on both servers SCS, DTS to determine whether a handover may be performed or not. In this second state ST2, the virtual Programmable Logical Controller vPLC in the source server SCS may still responsible for handling the cell traffic, which may mean that the connection along the left solid line, ranging from the source server SCS to the network proxy NP, may still be »active«.

A third status ST3 may be characterized by a state transfer STF. At the beginning of the third status ST3 both virtual Programmable Logical Controllers vPLC - i.e. the virtual Programmable Logical Controller vPLC executed in the source server SCS and the virtual Programmable Logical Controller vPLC executed in the destination server DTS - may be executed synchronously. This may - in case that the respective virtual Programmable Logical Controllers vPLC are stateful - mean that their internal operation states are synchronized. In case that the respective virtual Programmable Logical Controllers vPLC are stateless - or, in other words, not stateful - the third status ST3 may be skipped. The internal operation states may be expressed by a collection of variables. Each value of this collection of variables may be prepared or compressed at the source server SCS. One or more variables - or one or more collection of variables - may then be transmitted via the network to the destination server DTS. The destination server DTS may then update its state according to updated variables received by said transmission. According to an embodiment, the time required to pass through these three statuses ST1, ST2, ST3 may be limited in order to achieve a deterministic state update. This will be explained in detail further down below. So far, the network path between cell and the new virtual Programmable Logical Controller vPLC location destination server DTS has been established. Additionally, the state of the virtual Programmable Logical Controllers vPLC is synchronized, assuming that they are stateful.

A fourth status ST4 may be the last state of the migration procedure, wherein a handover of the virtual Programmable Logical Controller vPLC occurs. In this state, the network proxy NP may be used to monitor and check whether the states of the virtual Programmable Logical Controllers vPLC are synchronized and/or their behavior - which may include output signals of the virtual Programmable Logical Controllers vPLC dependent on input patterns or signals as received from the production cell - is similar or not. The handover process may be handled by a program executed on the network proxy NP, and/or alternatively, by human assistance.

The handover process may take some time until both instances of the virtual Programmable Logical Controller operations are fully aligned. If any issues have arisen in the preceding steps, the migration may be halted without affecting production cell operations or the production process itself. However, if the decision is made to proceed with the migration, the handover can be swiftly executed by the network proxy NP in a negligible time. This handover may merely involve reconfiguring the hardware (e.g. an ASIC) in order to cease forwarding traffic from the source server SCS to the production cell and start forwarding the destination server DTS traffic. Typically, this reconfiguration may occur in a range of microseconds, as it happens at a hardware level and may be planned for the future. At this fourth status ST4, the production cell may be connected to the destination server DTS via the network proxy NP, which is indicated by a solid line as an »active« connection. The connection between the source server SCS and the Proxy is terminated and/or deleted, allowing removal of the old vPLC instance from the source server SCS.

In the following, an embodiment of a migration process is described in more detail below, wherein the migration process may include several successive phases, which are explained with reference to FIG. 6 through FIG. 8. The exemplary migration process may utilize functional units, which may be consistently designated by their reference signs as used in FIG. 3. The migration process may be used for seamless migrating a virtual Programmable Logical Controller vPLC or, more generally, an industrial control process from one sever to another. The respective environments on which servers operate, the network, and the production cell may be heterogeneous. The environment may, therefore, referred to as a converged network environment.

Fig. 6 illustrates a schematic process chart depicting an exchange of data transmissions for operating a migration request. The migration request, being a first phase of the migration process, may be initiated either by an Operator OP or by the orchestration service OS.

In the first case wherein the migration request is initiated by an Operator OP, this Operator OP may submit the migration request 601 to a process repository manager PLCM - which may be embodied as part of the previously mentioned TIA portal - which forwards this request as a forwarded request 602 to the migration controller MC. The migration controller may be described as an actual principal of the operation for migrating the virtual Programmable Logical Controller vPLC. Since the request 601 is recognized to be made by a human, the migration controller MC may validate in a loop 603 whether the request 601 may be performed or not. If the destination server DTS may only provide inadequate and/or insufficient resources or if the network path from the production cell to the destination server DTS fails to meet Quality of Service (QoS) requirements, the migration controller MC may inform the operator OP through a notification 604 that the migration may not be feasible or not possible. In the second case described hereinafter, wherein not the operator OP but the orchestration service OS initiates the migration, these migration requirements have been taken into account right from start.

In the second alternative case wherein the migration request is initiated by the orchestration service OS, this orchestration service OS sends the migration request 605 directly to the migration controller MC. The orchestration service OS may issue this migration request for the reason to optimize the network and resources using the implemented logics such as automated network management. In this second case the orchestration service OS instead of a human operator OP initiates the migration. For this reason, the migration requirements may already be considered and verified by the orchestration service OS before a migration request is sent off. The benefits of network orchestration and automation technologies extend beyond simplifying network management, furtherly enhancing network configuration and operation, resulting in increased reliability and optimization. The first phase or migration request of the migration process as explained by FIG. 6 may now be concluded.

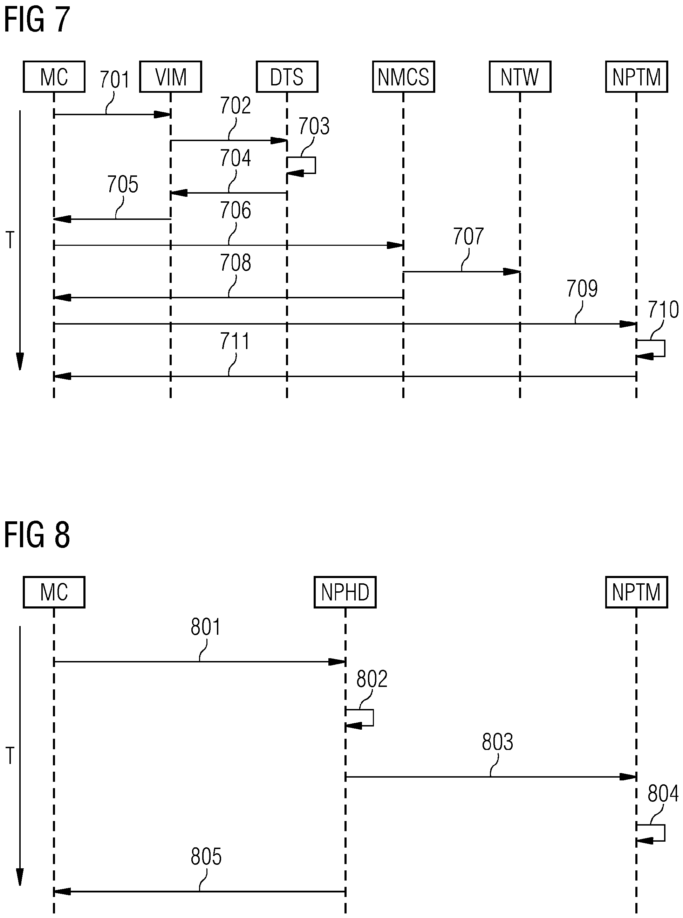

After the first phase or migration request has been concluded, a second phase or initialization ensues. FIG. 7 illustrates a schematic process chart depicting an exchange of data transmissions for operating this initialization.

In FIG. 7 and FIG. 8, functional units NPTM, NPHD, NPMB mentioned below may be functionally linked to or integrated within the network proxy NP so that in certain embodiments functional units NPTM, NPHD, NPMB may even be specific components NPTM, NPHD, NPMB of the network proxy NP:

- the network proxy traffic manager NPTM;
- the network proxy handover decision module NPHD; and/or;
- the network proxy message buffer NPMB.

Being integrated within the network proxy NP may specifically mean that the functional units NPTM, NPHD, NPTM, NPMB may communicate with the network proxy NP by device-internal or even chip-internal interfaces or busses instead of a communication via a packet-oriented network as depicted in FIG. 3.

A structural relationship or inclusion of the functional units NPTM, NPHD, NPTM, NPMB may mean that in cases where this description generally refers to the network proxy NP in general, the general reference may be interpreted to mean that that one or more of the aforementioned specific components NPTM, NPHD, NPTM, NPMB of the network proxy NP may take precedence over the operation being referred to, rather than the general network proxy NP as a whole. Conversely, in cases where this description specifically refers to one or more of the aforementioned specific components NPTM, NPHD, NPTM, NPMB, this reference may also be understood to imply that a combination of the aforementioned specific components mentioned above, or the network proxy NP itself as a whole may take precedence over the operation referred to.

At the outset of a scenario, as depicted in FIG. 7, the virtual Programmable Logical Controller or, more generally, the industrial control process, may continue to operate on the source server SCS, implying a state which also shown in the second status ST2 of FIG. 5. In this initialization phase, a newly instantiated virtual Programmable Logical Controller may be launched on the destination server DTS. Further on, required paths within the network NTW may be established and additional configurations may be applied.

The migration controller MC may transfer a request message 701 to the virtual infrastructure manager VIM in order to request creation of the new instance of the virtual Programmable Logical Controller being substantially of the same type than the virtual Programmable Logical Controller still being executed on the destination server DST. The virtual infrastructure manager VIM may forward this request message 701 as a forwarded request 702 to the destination server DTS. In a loop 703, the destination server DTS may launch the newly instantiated virtual Programmable Logical Controller, this loop 703 being processed until launching the newly instantiated virtual Programmable Logical Controller has been successfully completed. The successful completion may be reported by the destination server DTS using a notification message 704 sent to the virtual infrastructure manager VIM, which is subsequently forwarded by the virtual infrastructure manager VIM as a forwarded notification message 705 to the migration controller MC.

In the subsequent steps, it may be necessary to establish a new network path between the network proxy NP and the destination server DTS. Throughout the new network path - extending from the production cell to the virtual Programmable Logical Controller vPLC on the destination server DTS - it may be necessary to adhere to Quality of Service (QoS) requirements. These requirements may, for instance, include a maximum allowable end-to-end delay time to be imposed on the new network path. The path setup may be performed by the network management and control system module NMCS, configuring the network for the new path and the connection between the network proxy NP and the destination server DTS.

The migration controller MC may transfer a request message 706 to the network management and control system NMCS in order to request setting up a deterministic path. The network management and control system NMCS may establish this request by one or more commands 707 imposed on the network NTW to setup a deterministic path between the network proxy NP and the virtual Programmable Logical Controller vPLC on the destination server DTS. The successful setup of a deterministic path may be reported by the network management and control system NMCS using a notification message 708 sent to the migration controller MC.

Ultimately, the migration controller MC may instruct the network proxy traffic manager NPTM to commence duplicating the input signals from the production cell to the new instance of the virtual Programmable Logical Controller vPLC running on the destination server DTS. To this end, the migration controller MC may transfer a request message 709 to the network proxy traffic manager NPTM in order to request starting the traffic duplication. In a loop 710, the network proxy traffic manager NPTM may start this traffic duplication, the loop 710 being processed until traffic duplication has been successfully started. The successful start may be reported by the network proxy traffic manager NPTM using a notification message 711 sent to the migration controller MC. At this stage, the network proxy NP may send input signals from the cell to both virtual Programmable Logical Controller vPLC instances residing on the source server SCS and the destination server DTS, respectively. However, for now, the network proxy NP may only forward the output signal from the virtual programmable logical controller vPLC being executed on the source server SCS to the production cell.

The connection with the virtual programmable logical controller vPLC being executed on the source server SCS may be still active until it is ensured that the state of both instances of the virtual Programmable Logical Controller vPLC - or more generally, of both instances of the industrial control process - are successfully synchronized between the both instances, i.e. the virtual Programmable Logical Controller vPLC instance residing on the source server SCS and the virtual Programmable Logical Controller vPLC instance residing on the destination server DTS. The second phase or initialization of the migration process as explained by FIG. 7 may now be concluded.

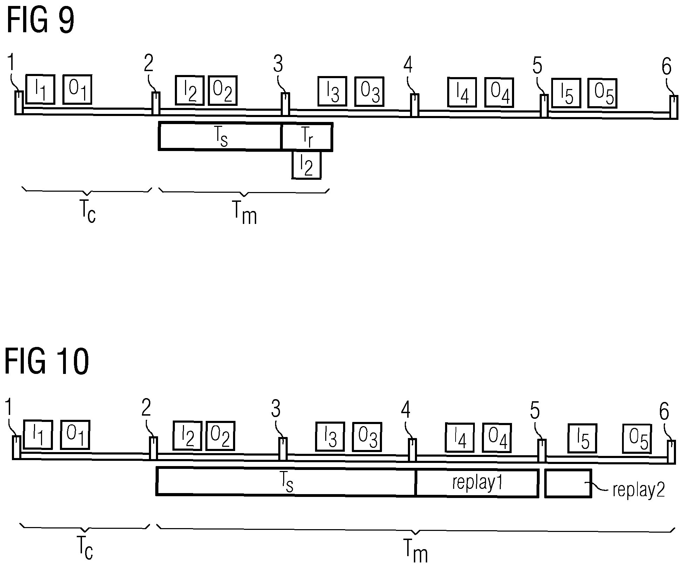

After the completion of the second phase or migration request, a third phase or handover may ensue. Both FIG. 8 and FIG. 9 illustrate schematic process charts depicting an exchange of data transmissions for managing this handover. In FIG. 8, the process involves a handover for migrating a stateless industrial control process or stateless virtual Programmable Logical Controller vPLC, while in FIG. 9, the process involves a handover for migrating a stateful industrial control process or stateful virtual Programmable Logical Controller vPLC.

A seamless handover may be achieved by applying state synchronization mechanisms which may migrate the state of the virtual Programmable Logical Controller vPLC instance residing on the source server SCS to the state of the virtual Programmable Logical Controller vPLC instance residing on the destination server DTS without substantially interrupting traffic exchange and/or operations of the production cell. The seamless handover is to be accomplished in a cycle-time-compliant manner adhering to timed framework conditions imposed by deterministic behavior of at least parts of the converged network and/or time-synchronized system components enabled to maintain industrial standards for synchronization protocols such as Precision Time Protocol or PTP.

FIG. 8 illustrates a schematic process chart depicting an exchange of data transmissions for operating this handover for one or more stateless virtual Programmable Logical Controller vPLC, or, more generally, one or more stateless industrial control process. A virtual Programmable Logical Controller vPLC or industrial control process vPLC may be considered stateless if it does not retain or store any operational state. In this case, the handover as part of the migration process may merely include a change in the forwarding messages and signals from or to the network Proxy NP by switching the active connection from the virtual Programmable Logical Controller vPLC instance residing on the source server SCS to the virtual Programmable Logical Controller vPLC instance residing on the destination server DTS as shown by the state transfer STF in the third status ST3 of FIG. 3. Switching the active connection may mean that the network Proxy NP forwards input signals from the production cell only to the virtual Programmable Logical Controller vPLC instance residing on the destination server DTS, which, in other words means that the third status ST3 of FIG. 3 may be skipped and that the fourth status ST4 of FIG. 3 may immediately be entered after conclusion of the second status ST2 as shown in FIG. 3.

According to the sequence diagram as shown in FIG. 8, the migration controller MC may initiate the handover process by sending a request message 801 to the network proxy handover decision module NPHD. In a loop 802, the network proxy handover decision module NPHD may assess whether traffic and/or signal exchange of both virtual Programmable Logical Controller vPLC instances - residing on the source server SCS and the destination server DTS, respectively - align or are at least similar. The loop 802 may continue until handover requirements are met. Alternatively, an operator may inspect loop 802 and/or utilize an exit condition of loop 802 to determine that predefined handover requirements have been met, allowing for manual exit from the loop 802.

Having exited the loop 802, the network proxy handover decision module NPHD may schedule the handover by instructing the network proxy traffic manager module NPTM through an instruction message 803 to execute the handover during the next i-th cycle, where i represents a natural number. In the subsequent i-th cycle following the point in time when the instruction message 803 was sent, the network proxy traffic manager module NPTM may now perform the handover within a loop 804. This handover may involve disconnecting - or stopping - the connection of the virtual Programmable Logical Controller vPLC residing on the source server SCS while maintaining the connection of the virtual Programmable Logical Controller vPLC residing on the destination server DTS as the main active connection. Finally, the network proxy handover decision module NPHD may notify by a notification message 805 the successful migration to the migration controller MC.

FIG. 9 illustrates a schematic timing chart depicting a process for migrating one or more stateful virtual Programmable Logical Controllers vPLC, or, more generally, one or more stateful industrial control processes, wherein the migration extends over one cycle of the deterministic network. A virtual Programmable Logical Controller vPLC or industrial control process vPLC may be considered stateful when it retains or store an operational state of any kind such as an internal counter, timer, operational state or context information, conditions, etc. In the schematic timing chart illustrated by FIG. 9, a time progressing from left to right is plotted on the horizontal abscissa. On this abscissa, in this order, six cycle time points 1, 2, 3, 4, 5, 6 are plotted with advancing time. The time points 1, 2, 3, 4, 5, 6 mark a beginning of the first, second, ... etc. cycle. In the first cycle 1, an initialization is assumed of having been completed, in the second cycle 2, a migration may start, in the fifth cycle 5, the migration is completed, and in the sixth cycle 6, the handover is completed.

The timing chart of FIG. 9 also shows input signals $I_1$, $I_2$, $I_3$, $I_4$, $I_5$ sent from the production cell to the virtual Programmable Logical Controller vPLC and output signals $O_1$, $O_2$, $O_3$, $O_4$, $O_5$ as sent from the Programmable Logical Controller vPLC to the production cell. The respective indices of the input signals $I_1$, $I_2$, $I_3$, $I_4$, $I_5$ and the output signals $O_1$, $O_2$, $O_3$, $O_4$, $O_5$ are numbered in an ascending order and respectively correspond to the respective cycle 1, 2, 3, 5, 5.

The virtual Programmable Logical Controller vPLC residing on the destination server DTS should eventually operate with the same states as the virtual Programmable Logical Controller vPLC residing on the source server SCS, ensuring that both virtual Programmable Logical Controllers vPLC may ultimately produce consistent outputs. While, at the outset, only output of the source server SCS may be forwarded to the production cell, once the handover 6 is completed, the destination server DTS is the sole provider of output forwarded to the production. The state transfer may be prepared in the virtual Programmable Logical Controller vPLC residing on the source server SCS. There, on the source server SCS, a duration - or time span - required for state preparation may be determined and recorded.

The duration $\Delta_{src}$ required for state preparation on the source server SCS may then be transferred over the network to the virtual Programmable Logical Controller vPLC residing on the destination server DTS, which accordingly calculates a duration $\Delta_{dst}$ required for state processing on the destination server DTS. Both durations may be added with a network delay $\Delta_{n,src,dst}$ between the source server SCS and the destination server DTS. This network delay $\Delta_{n,src,dst}$ is a duration needed to transfer the duration $\Delta_{src}$ required for state preparation on the source server SCS over the network on the virtual Programmable Logical Controller vPLC residing on the destination server. Adding said three durations may eventually result in a total state transfer duration $T_s$ required for the state transfer to complete the handover:

$$T_s = \Delta_{src} + \Delta_{n,src,dst} + \Delta_{dst}$$

The total state transfer duration $T_s$ may be divided by a duration of one cycle $T_C$ in order to determine a total number of cycles $N_C$ required for the state transfer:

$$N_C = \left\lceil \frac{T_s}{T_C} \right\rceil$$

The value of all three parameters in the quotient above may be determined or alternatively measured and optionally upper-bounded. Specifically, the duration required for state preparation on a respective server SCS, DTS may be measured in different scenarios e.g., with different state sizes, number of variables, CPU resources, etc. Subsequently, a worst-case value may be considered as the upper bound. Also, said network delay $\Delta_{n,src,dst}$ between the source server SCS and the destination server DTS may be upper bounded by relying on a deterministic nature of industrial network setups. An end-to-end delay between each network server may further be known from and/or guaranteed by a network calculus.

According to an embodiment aiming at reducing the total state transfer duration $T_s$ needed to transfer the states from the virtual Programmable Logical Controller vPLC residing on the destination server DTS to the virtual Programmable Logical Controller vPLC residing on the source server SCS, one or more states may be transferred via a network path with high network bandwidth. Reducing the total state transfer duration $T_s$ may be considered as one objective when the path between both virtual Programmable Logical Controllers for state transfer is consecutively calculated or approximated. According to another embodiment, a multipath network route may be used between $S_{src}$ and $S_{dst}$ to increase or to further increase the state transfer bandwidth, hence reducing the network delay $\Delta_{n,src,dst}$.

Input messages and/or signals which have been missed during the state transfer may be buffered by the network proxy message buffer NPMB and may be consecutively sent to the virtual Programmable Logical Controller vPLC to catch up with the latest changes in the virtual Programmable Logical Controller vPLC state. This is called state replay mechanism. Therefore, the total migration time $T_m$ can be calculated as:

$$T_m = T_s + T_r$$

Where $T_r$ represents a total replay transfer time. The total replay transfer time may substantially depend on two parameters, a network delay $\Delta_{n,p,dst}$ for replaying buffered input signals from the network proxy NP to the virtual Programmable Logical Controller vPLC residing on the destination server DTS and a replay processing duration $\Delta_{r,dst}$ needed by the virtual Programmable Logical Controller vPLC residing on the destination server DTS to update its state based on the received buffered input signal.

Let $N_r$ be denoted as the maximum number of input signals that may be replayed within a time cycle. Consequently, a quotient

$$\left\lceil \frac{N_c}{N_r} \right\rceil$$

may determine a number of cycles required to transmit buffered signals to the virtual Programmable Logical Controller vPLC residing on the destination server DTS. Therefore, the entire equation shown above may result the time needed to complete the replay of buffered signals for the virtual Programmable Logical Controller vPLC residing on the destination server DTS.

The state transfer time $T_s$ may have different values, depending on the state size, available bandwidth, virtual Programmable Logical Controller vPLC implementation, etc. In any case, the proposed methods are able to synchronize the state within a guaranteed time. This mechanism will now be elaborated upon in two distinct cases.

Turning again to FIG. 9 illustrating the timing for a case where the migration extends over one cycle. In this first case the result of the quotient

$$\left\lceil \frac{N_c}{N_r} \right\rceil = 1$$

may be exactly one, which means that exactly one cycle is required to complete the state transfer. This may further mean that if the state transfer time may be finished within a cycle time $i$, the input signal $I_i$ from the cell that arrived the $i^{th}$ cycle will be missed in the state and needs to be sent separately to the virtual Programmable Logical Controller vPLC residing on the destination server DTS. For instance, according to FIG. 9, the state transfer may start in the second cycle 2 and the second input signal $I_2$ and its effect on the second state 2 is missed in the transferred state. Here, $N_c = 1$, which means that the state transfer has taken one cycle, thus there is only one input signal $I_2$ in the buffer. In order to make sure that the virtual Programmable Logical Controller vPLC residing on the destination server DTS has the same state as the virtual Programmable Logical Controller vPLC residing on the source server SCS the network proxy message buffer NPMB may buffer the second input signal $I_2$. In a subsequent cycle i + 1 = 3, the proxy message buffer NPMB will replay the buffered second input signal $I_2$ to the virtual Programmable Logical Controller vPLC residing on the destination server DTS. Then, at the third cycle 3, the virtual Programmable Logical Controller vPLC may first update its state based on the replayed input signal $I_2$ without calculating or outputting the result. After applying the state update with $I_2$, the virtual Programmable Logical Controller vPLC residing on the destination server DTS may continue its normal operation by processing the third input signal $I_3$ and outputting the third output signal $O_3$ towards the production cell. In this way, the states of both virtual Programmable Logical Controllers vPLCs may be successfully synchronized.

However, there may be a constraint required to be met by the migration process, otherwise, the migration procedure will not be executed and/or may fail. This first constraint may be formulated as follows: Processing the replayed inputs and processing of the next regular input signal must be finished before the end of the time cycle, or in the case as shown in FIG. 9, within the third cycle 3.

This constraint may ensure that processing the replayed message $I_2$ and the regular input message $I_3$ is done and $O_3$ is outputted before the third cycle 3 is finished. According to this first case it may be necessary that $N_r \geq 1$. While FIG. 9 illustrates the timing of a migration in a first case where the migration extends over one cycle, a following second case is described which is illustrated by FIG. 10. This second case addresses state transfers that require more than one cycle time for completion.

FIG. 10 illustrates a schematic timing chart depicting a process for migrating one or more stateful virtual Programmable Logical Controllers vPLC, or, more generally, industrial control processes, the migration extending over more than one cycle. In this second case, the result of the quotient

$$\left\lceil \frac{N_C}{N_r} \right\rceil \geq 2$$

may be equal or greater than two, which means that the number of cycles required to complete the state transfer is greater than two. In the exemplary scenario according to FIG. 10, the state transfer may take $N_C = 2$ cycles which means there are initially two buffered input signals $I_2, I_3$ to be replayed to the virtual Programmable Logical Controller vPLC residing on the destination server DTS. In this second case, the first constraint formulated for the first case may not be applicable. Indeed, the second and the third input signals $I_2, I_3$ may not be replayed while additionally processing the fourth input signal in the same fourth cycle $I_4$. Therefore, merely the second and the third input signals $I_2, I_3$ may be replayed at the fourth cycle 4 while the fourth input signal $I_4$ - which is regularly received in the same fourth cycle 4 - is not yet processed within this fourth cycle 4 but buffered. Accordingly, in the subsequent fifth cycle 5, the fourth input signal $I_4$ may be replayed and the regularly incoming fifth input signal $I_5$ may be processed based on the first constraint. In order to ensure the correctness of this process, a second constraint may be needed. This second constraint may be formulated as follows: At each cycle, at least two messages must be able to be replayed to the virtual Programmable Logical Controller vPLC residing on the destination server DTS. This may mean in other words that $N_r$ - under the assumption that there is only one input signal per cycle - must be greater than two or $N_r \geq 2$.

Applying the second constraint may ensure that even in cases where the state transmission may require more than one cycle - i.e. in cases where the number of buffered signals may even exceed one or $N_r \geq 2$ - the buffered signals may still be replayed to the virtual Programmable Logical Controller vPLC residing on the destination server DTS, resulting in eventual convergence of state synchronization. If, however, the second condition may not be met, the replaying and/or convergence of the states between the two virtual Programmable Logical Controller vPLC instances may fail, whereby a failure may lead to an abortion of the migration process.

In order to further increase the success rate of migrations - or, in other words to increase the chance for the first condition being met - further optimizations of the total migration duration $T_m$ may be feasible. Due to the fact that the total migration duration $T_m$ is a sum of the total state transfer duration $T_s$ and the total replay transfer duration $T_r$, optimizations may be made in two places. If the total state transfer duration $T_s$ increases, the same

applies to the number of cycles $N_C$ for the state transfer. This may further result in a greater number of buffered messages to be sent to the virtual Programmable Logical Controller vPLC residing on the destination server DTS, disadvantageously resulting in a greater value of the total replay transfer duration $T_r$. In order to increase the migration success rate, the following optimizations may be feasible:

- Reducing the total state transfer duration $T_s$: Such reduction may be accomplished by either compressing the state size to be transferred, thereby decreasing the state size to be transferred, or, by increasing the bandwidth of the state transfer path between the two virtual Programmable Logical Controller vPLC instances. Reducing the total state transfer duration $T_s$ may lead to a lower number of cycles $N_C$ for the state transfer and hence to a lower total replay transfer duration $T_r$.

- Reducing the total replay transfer duration $T_r$: Such reduction may be accomplished by choosing network path with high network bandwidth between the network proxy NP to the virtual Programmable Logical Controller vPLC residing on the destination server DTS for replaying buffered input signals - hence reducing the network delay $\Delta_{n,p,dst}$ for replaying buffered input signals - and/or by reducing the replay processing duration $\Delta_{r,dst}$. A reduction of the latter replay processing duration $\Delta_{r,dst}$ may be accomplished by improving the virtual Programmable Logical Controller vPLC implementation such that it may faster update its state.

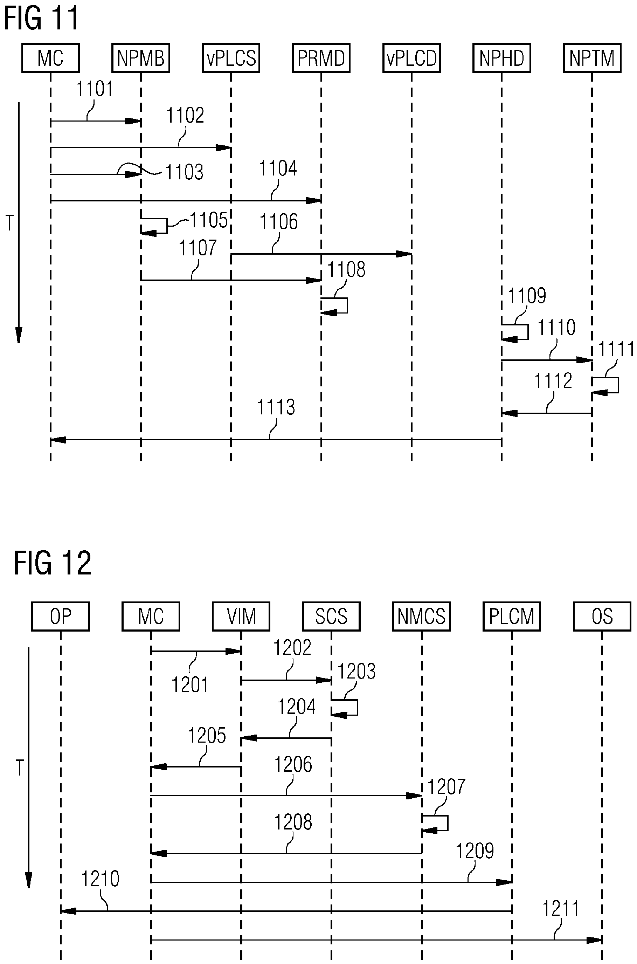

Fig. 11 illustrates a schematic process chart depicting a chronologically ordered exchange of control and data transfer transmissions amongst various functional units MC, NPMB, vPLCS, PRMD, vPLCD, NPHD, NPTM cooperating to control a handover for one or more stateful control processes.

In a first step entitled migration planning, messages 1101 through 1104 are exchanged for planning the migration process. In the following it is assumed that the state migration process begins with cycle $i$, where $i$ may represent a natural number. The migration controller MC may send a command message 1101 instructing the network proxy message buffer NPMB to start buffering input signals at a cycle $i$. The migration controller MC may further send a second command message 1102 instructing the Programmable Logical Controller instance vPLCS residing on the source server SCS to send its state to the virtual Programmable Logical Controller instance vPLCD residing on the destination server SCS. The command message 1102 instructs the Programmable Logical Controller instance vPLCS residing on the source server SCS to send its state at cycle i. The migration controller MC may then calculate the total number of cycles $N_C$ - hereinafter denoted as $j$ to express the temporal connection with the cycle $i$ in which the state migration process begins - required for the state transfer:

$$j = \left\lceil \frac{T_s}{T_c} \right\rceil$$

. Thus, the state migration is expected to finish at cycle $i + j$. The migration controller MC may further send a third command message 1103 instructing the network proxy message buffer NPMB to replay buffered input signals beginning from cycle $i + j$. The migration controller MC may further send a fourth command message 1104 instructing the virtual Programmable Logical Controller instance vPLCD residing on the destination server STD to process the replayed messages and to update its vPLC state accordingly beginning from cycle $i + j$. The first step or migration planning may now be concluded.

After the first step of migration planning has concluded, a second step for the actual migration procedure ensues. In this second step, entitled migration procedure, messages 1105 through 1108 may be exchanged, and/or loops carried out, while the tasks scheduled in the preceding first step of migration planning may now be executed. Beginning from cycle $i$, the network proxy message buffer NPMB may buffer signals in a loop 1105. The already scheduled state transfer may executed by a transmission message 1106 by which states may be transferred from the virtual Programmable Logical Controller instance vPLCS residing on the source server SCS to the virtual Programmable Logical Controller instance vPLCD residing on the destination server STD. The network proxy message buffer NPMB may now replay the buffered input signals and send these buffered signals by a message 1107 to the virtual Programmable Logical Controller instance vPLCD residing on the destination server STD. The PLC replay module PRMD may replay the state update in a loop 1108. The second step or migration may now be concluded.

After the second step or migration procedure has been concluded, a third step or handover ensues. In this third step, entitled handover, messages 1109 through 1113 may be exchanged - and/or loops carried out - while the state of the virtual Programmable Logical Controller instances vPLCS, vPLCD may be synchronized, and both instances may work in parallel. The production cell operation, however, may still be handled by the virtual Programmable Logical Controller instance vPLCS residing on the source server SCS. The behavior of both virtual Programmable Logical Controller instances vPLCS, vPLCD may be monitored by the network proxy handover decision module NPHD of the network proxy NP. In a control loop 1109, this behavior may be continuously monitored either by a computer program or a human operator. The control loop 1109 may confirm the state migration being successfully completed in that the behavior of both virtual Programmable Logical Controller instances vPLCS, vPLCD may now be identical at this point in time. In case of positive outcome - meaning that the state migration has been successfully completed - the network proxy handover decision module NPHD may plan the handover to take place at cycle $k$. Although the present embodiments are not restricting the handover to any specific point in time or cycle - it may alternatively happen at any time being technically appropriate or convenient - an actual handover is assumed to happen at cycle k wherein within a loop 1111 the network proxy traffic manager NPTM module of the network Proxy NP may switch the active connection to the virtual Programmable Logical Controller instance vPLCD residing on the destination server STD for handling the production cell traffic from now on. Using a preferred implementation in hardware, this switching may be completed in the range of microseconds or nanoseconds. At this point, the network proxy traffic manager NPTM may send a notification message 1112 to the network proxy handover decision module NPHD in order to report the handover being successfully finished. Finally, the network proxy handover decision module NPHD may transmit a notification message 1113 to the migration controller MC reporting that the state migration process has been completed. The third step or handover may now be concluded.

After the third step or handover may have been successfully concluded, a optional fourth step or migration cleanup may optionally ensue. Fig. 12 illustrates a schematic process chart depicting an exchange of data transmissions for operating the fourth step or migration cleanup. In this fourth step migration cleanup handover, messages 1201 through 1211 may be exchanged - and/or loops carried out - amongst various functional units MC, VIM, SCS, NMCS, PLCM, OS and/or an optional operator OP for collaborating on the cleanup, particularly for releasing unused resources from the previous virtual Programmable Logical Controller vPLC configuration. The migration controller MC may initially transmit a request message 1201 to the virtual infrastructure manager VIM requesting to delete the virtual Programmable Logical Controller instance vPLCS residing on the source server SCS. The virtual infrastructure manager VIM may then send a request message 1202 to the source server SCS in order to request a deletion of a respective container and/or virtual machine hosting the virtual Programmable Logical Controller instance vPLCS from the source server SCS.

By a loop 1203, the Programmable Logical Controller instance vPLCS may be deleted at the source server SCS thereby releasing resources on said source server SCS. By subsequent notification messages 1204, 1205, the virtual infrastructure manager VIM and, subsequently, the migration controller MC modules are notified that the Programmable Logical Controller instance vPLCS residing on the source server SCS may have been successfully deleted. Subsequently, the migration controller MC may send a request message 1206 to the network management and control system NMCS for requesting deletion of the network path between the network proxy NP and the source server SCS, since this path is not used anymore. By a loop 1207, the network management and control system NMCS may delete the network path between the network proxy NP and the source server SCS in order to release resources in the network. Subsequently, the network management and control system NMCS may send a notification message 1208 in order to notify the migration controller MC of the successful deletion of the previous path between the Proxy and the source server SCS.

After having cleaned the resources, a notification of the operator OP and/or the orchestration service OS - both potential initiators of the migration operation - about the successful migration may ensue. The migration controller MC may send a notification message 1209 notifying the process repository manager PLCM that the migration has concluded successfully. The process repository manager PLCM, having received said notification message 1209, may forward a notification message 1210 notifying the operator OP that the migration has concluded successfully. The migration controller MC may - preferably in cases where the migration has been initiated by the orchestration service OS - send a further notification message 1211 notifying the orchestration service OS that the migration has concluded successfully.

The present embodiments enable a migration procedure, designed to function without any buffering at the destination server. The embodiments may therefore be utilized not only within factories but also across multiple factories and cloud infrastructures, thereby supporting a broad spectrum of use cases. The proxy mechanism according to the present embodiments may be placed flexibly over the infrastructure. A key feature of the present embodiments is their ability to prevent any interruption in control processes, ensuring seamless operation.

The present embodiments provide an interruption-free migration of an industrial control process from a source instance of the industrial control process, or source control process, to a destination instance of the industrial control process, or destination control process. A proposed method involves the use of a network proxy representative of the industrial control process during the transfer process to intervene and control at least one device within one or more production cells. The network proxy may intervene in an active connection between a source control process and the at least one industrial device, transparently forwarding messages exchanged between them. Subsequently, a second passive connection may be established between a destination control process and the network proxy. This connection may be used to transparently forward duplicate messages exchanged between the network proxy and the at least one industrial device to the destination control process. Subsequently, the previous active connection may be converted into a passive one, executing both source and destination industrial control processes synchronously while synchronizing their internal operational states. Subsequently, the connection of the industrial device to the destination industrial control process may be handed over by converting the second passive connection between the destination industrial control process and the network proxy into an active connection extending from the destination industrial control process to the industrial device, the destination industrial control process assuming control over the industrial device. Eventually, the passive connection between the source control process and the industrial device may be terminated. The present embodiments ensure a smooth and uninterrupted transition of control from one industrial control process to another, wherein large parts of the migration process may extend over one or more cycle of a deterministic network.

Advantageously, the present embodiments may operate independently of a target platform which also allows for operation across geographically distributed computing resources and/or data centers. The present embodiments permit the deployment of multiple proxy instances. This flexibility enables the proxy to be positioned according to the specific demands of a production plant, while also optimizing the use of available resources. Different placements may offer various advantages, such as reduced latency or decreased data rate consumption.

The present embodiments may rely on a proxy or poxy module which may be arranged for rewriting input signals from the production cells and buffering said input signals. The industrial control process - or more specifically, the virtual programmable logic controller - may be extended by a state migration module arranged for replaying the buffered signals.

In this way, the migrated - also correctly termed as newly instantiated - instance of the virtual programmable logic controller eventually aligns with - or: converges to - a same operational state as the previous instance, even in scenarios where migration spans more than one cycle

The invention benefits from timed framework conditions offered by deterministic networks and/or time-synchronized system components - such as time-synchronized servers, switches, management systems etc. - which may be enabled maintaining industrial standards for synchronization protocols such as a well-known Precision Time Protocol or PTP.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

**Claims**

1. A method for migrating an industrial control process controlling at least one industrial device in a production cell over a deterministic network utilizing a network proxy for adhering to a time-synchronized scheduling imposed by the deterministic network, the method comprising the steps of:

   a) intervening, by the network proxy (NP), an active connection between a source control process (vPLCS) and the industrial device by transparently forwarding messages exchanged between the source control process (vPLCS) and the industrial device;
   b) establishing a second passive connection between a destination control process (vPLCD) and the network proxy (NP) for transparently forwarding duplicate messages exchanged between the network proxy (NP) and the industrial device to the destination control process (vPLCD);
   c) converting the active connection between the source control process (vPLCS) and the industrial device into a passive connection, executing both source control process (vPLCS) and destination control process (vPLCD) synchronously;
   d) determining a schedule for synchronizing internal operational states by transferring state data from the source control process (vPLCS) to destination control process (vPLCD) within one or more cycles of the deterministic network;
   e) transferring the state data from the source control process (vPLCS) to destination control process (vPLCD) according to the determined schedule;
   f) handing over, by the network proxy (NP) the connection of the industrial device to the destination control process (vPLCD) by converting the second passive connection between the destination control process (vPLCD) and the network proxy (NP) into an active connection extending from the destination control process (vPLCD) to the industrial device, the destination control process (vPLCD) assuming control over the industrial device; and
   g) terminating the passive connection between the source control process (vPLCS) and the industrial device.

2. The method according to claim 1 including the step of:
   a1) storing signals and/or messages from the source PLC (vPLCS), the destination PLC (vPLCD) and/or industrial device for utilizing the stored signals and/or messages when the destination PLC (vPLCD) assumes control.

3. The method according to claim 1 including the step of:
   e1) replaying, by a network proxy message buffer (NPMB), signals stored within the network proxy message buffer (NPMB) to the destination control process (vPLCD).

4. A network proxy for migrating an industrial control process controlling at least one industrial device in a production cell over a deterministic network utilizing a network proxy for adhering to a time-synchronized scheduling imposed by the deterministic network, the network proxy (NP) including:

   a) a network proxy traffic manager NPTM for intervening an active connection between a source control process (vPLCS) and the industrial device by transparently forwarding messages exchanged between the source control process (vPLCS) and the industrial device;
   b) the network proxy (NP) being configured for establishing a second passive connection between a destination control process (vPLCD) and the network proxy (NP) for transparently forwarding duplicate messages exchanged between the network proxy (NP) and the industrial device to the destination control pro-cess (vPLCD);
   c) the network proxy (NP) being configured for converting the active connection between the source control process (vPLCS) and the industrial device into a passive connection, executing both source control process (vPLCS) and destination control process (vPLCD) synchronously;
   d) the network proxy (NP) being configured for determining a schedule for synchronizing internal operational states by transferring state data from the source control process (vPLCS) to destination control process (vPLCD) within one or more cycles of the deterministic network;
   e) the network proxy (NP) being configured for transferring the state data from the source control process (vPLCS) to destination control process (vPLCD) according to the determined schedule;
   f) a network proxy handover decision module (NPHD) being configured for handing over the connection of the industrial device to the destination control process (vPLCD) by converting the second passive connection between the destination control process (vPLCD) and the network proxy (NP) into an active connection extending from the destination control process (vPLCD) to the industrial device, the destination control process (vPLCD) assuming control over the industrial device; and;

g) the network proxy (NP) being configured for terminating the passive connection between the source control process (vPLCS) and the industrial device.

5. The network proxy according to claim 4, the network proxy handover decision module (NPHD) being configured for comparing and verifying signals and/or messages being exchanged by the source PLC (vPLCS) and the destination PLC (vPLCD).

6. The network proxy according to one of the aforementioned claims 4 and 5 including a proxy message buffer NPMB (NPMB) for storing signals and/or messages from the source PLC (vPLCS), the destination PLC (vPLCD) and/or industrial device and for replaying the stored signals and/or messages to a destination PLC (vPLCD) assumes control over the industrial device.

FIG 1

FIG 2

# FIG 3

FIG 4

EP 4 682 652 A1

PO1　　PO2　　PO3　　PO4

FIG 5

SCS        DTS        SCS        DTS        SCS    STF    DTS        SCS        DTS

[vPLC]                [vPLC]    [vPLC]    [vPLC]    [vPLC]                     [vPLC]

NP                    NP                    NP                    NP

↑                     ↑                     ↑                     ↑

ST1                   ST2                   ST3                   ST4

FIG 6

| OP | OS | PLCM | MC |

601

602

603

T

604

605

## FIG 7

## FIG 8

## FIG 9

## FIG 10

# FIG 11

| MC | NPMB | vPLCS | PRMD | vPLCD | NPHD | NPTM |

1101
1102
1103
1104
1105
1106
1107
1108
1109
1110
1111
1112
1113

T

# FIG 12

| OP | MC | VIM | SCS | NMCS | PLCM | OS |

1201
1202
1203
1204
1205
1206
1207
1208
1209
1210
1211

T

# EUROPEAN SEARCH REPORT

**Application Number**

EP 24 18 9224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUNDALL MICHAEL ET AL: "Downtime Optimized Live Migration of Industrial Real-Time Control Services", 2022 IEEE 31ST INTERNATIONAL SYMPOSIUM ON INDUSTRIAL ELECTRONICS (ISIE), IEEE, 1 June 2022 (2022-06-01), pages 253-260, XP034155015, DOI: 10.1109/ISIE51582.2022.9831601 [retrieved on 2022-07-25] * chapter VI. "NOVEL CONCEPT" * * figure 2 * | 1-6 | INV. G05B19/05 |
| A | US 2019/199626 A1 (THUBERT PASCAL [FR] ET AL) 27 June 2019 (2019-06-27) * paragraphs [0013], [0071] - [0073], [0094] * * figure 4 * | 1-6 | |
| A | US 2023/176884 A1 (FRANCIOSI FELIPE [GB] ET AL) 8 June 2023 (2023-06-08) * paragraphs [0019] - [0024], [0029] - [0033], [0066] - [0067] * * figures 1, 2 * | 1-6 | TECHNICAL FIELDS SEARCHED (IPC) H04L G06F G05B |
| A | US 2022/083368 A1 (FORNEY BRIAN [US]) 17 March 2022 (2022-03-17) * paragraphs [0004], [0028] - [0033], [0038] - [0043] * * claims 1-8 * * figures 1-6 * | 1-6 | |
| A | US 2020/293351 A1 (FOLEY SEAN CHRISTOPHER [US]) 17 September 2020 (2020-09-17) * paragraphs [0001], [0007], [0043] - [0048] * * figure 5 * | 1-6 | |

The present search report has been drawn up for all claims

| Place of search | Date of completion of the search | Examiner |
|---|---|---|
| Munich | 10 December 2024 | Hristov, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9224

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | Publication date |
|---|---|---|---|
| US 2019199626 A1 | 27-06-2019 | NONE | |
| US 2023176884 A1 | 08-06-2023 | NONE | |
| US 2022083368 A1 | 17-03-2022 | US 2021026673 A1 | 28-01-2021 |
| | | US 2022083368 A1 | 17-03-2022 |
| US 2020293351 A1 | 17-09-2020 | US 2020293351 A1 | 17-09-2020 |
| | | US 2020293352 A1 | 17-09-2020 |

EPO FORM P0459

For more details about this annex : see Official Journal of the European Patent Office, No. 12/82